# EUROPÄISCHE PATENTSCHRIFT

(11) **EP 0 878 354 B1**
(45) Veröffentlichungstag und Bekanntmachung des Hinweises auf die Patenterteilung: **07.08.2002**
(21) Anmeldenummer: 98890140.1
(22) Anmeldetag: 13.05.1998
(51) Int. Cl.: B60Q 1/068

(54) **Kfz-Scheinwerferverstellung**
Headlight adjusting device for vehicle
Réglage de phare de véhicule

(30) Priorität: 14.05.1997 AT 30097
(43) Veröffentlichungstag der Anmeldung: 18.11.1998
(73) Patentinhaber: Zizala Lichtsysteme GmbH, A-3250 Wieselburg (AT)
(72) Erfinder: Krenn, Roswitha, 3250 Wieselburg (AT)
(74) Vertreter: Matschnig, Franz, Dipl.-Ing.

(56) Entgegenhaltungen:
- DE-A- 3 040 870
- FR-E- 90 132
- US-A- 5 045 987

## Beschreibung

Die Erfindung betrifft eine Kfz-Scheinwerferverstellung, bei der der Kopf zumindest eines Schraubenbolzens in einer hülsenförmigen Gelenkschale schwenkbar gelagert ist und der Schraubenbolzenkopf eine Profilierung zum Drehen des Schraubenbolzens aufweist sowie die Gelenkschale an einem feststehenden Bauteil angeordnet ist.

Kfz-Scheinwerferverstellungen, bei denen der Kopf zumindest eines Schraubenbolzens in einer hülsenförmigen Gelenkschale schwenkbar gelagert ist, sind z.B. in der EP 225 480 A1 als bekannter Stand der Technik angeführt und werden innerhalb der Karosserie so betätigt, daß der Schraubenbolzen in einer fix angeordneten Ankerplatte verdreht wird und der am anderen Ende des Schraubenbolzens angeordnete Kugelkopf sitzt verdrehbar in einer hülsenförmigen Gelenkschale am Reflektor, sodaß durch Abstandsänderung des Kugelkopfs von der Ankerplatte der Reflektor gekippt werden kann, wobei üblicherweise ein gefederter Schwenkpunkt und zwei Kugelkopftriebe vorgesehen sind.

Gemäß der US-A 5 045 987, die eine Kfz-Scheinwerferverstellung nach dem Oberbegriff des Anspruchs 1 offenbart, kann die Gelenkschale gegenüber der Verankerung verdrehfest sein und der Schraubenbolzenkopf ist ein Kugelkopf mit stirnseitiger Profilierung zum Verdrehen, insbesondere zum Ansetzen eines Phillips-Schraubenziehers.

Es ist Aufgabe der Erfindung, eine verbesserte Kfz-Scheinwerferverstellung zu schaffen.

Erfindungsgemäß wird vorgeschlagen, die Gelenkschale gegenüber der Verankerung verdrehbar anzuordnen, so daß der Schraubenbolzen zusammen mit der Gelenkschale und über diese drehbar ist. Dazu weisen Schraubenbolzenkopf sowie Gelenkschale korrespondierende Führungen auf. Demgemäß ist erfindungsgemäß vorgesehen, daß Schraubenbolzenkopf und Gelenkschale korrespondierende Profilierungen aufweisen, die eine verdrehsichere Verbindung mit variabler Winkelstellung zwischen Schraubenbolzen und Gelenkschale ermöglichen, wobei insbesondere Schraubenbolzenkopf und Gelenkschale jeweils in einer ersten Axialebene randständige Erhebungen und in einer im rechten Winkel zur ersten Axialebene stehenden zweiten Axialebene randständige Vertiefungen aufweisen, wobei die Erhebungen eine kleinere Axialerstreckung als die Vertiefungen aufweisen. Oder aber sind die Profilierungen am Schraubenbolzenkopf in Form von benachbarten Längsabflachungen des Kopfs vorgesehen.

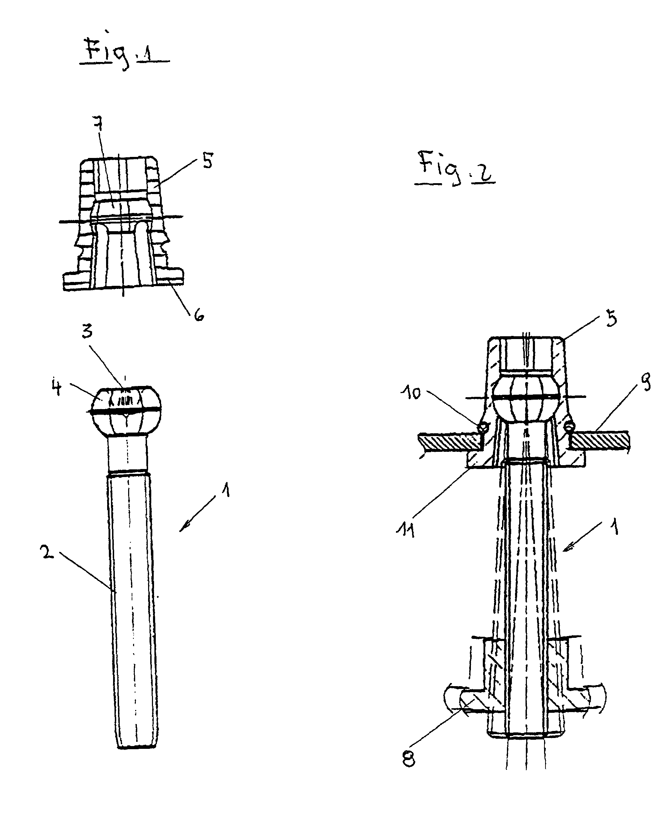

Die Erfindung wird nachfolgend anhand eines Ausführungsbeispiels unter Bezugnahme auf die Zeichnung näher erläutert, in der Fig. 1 eine hülsenförmige Gelenkschale und den korrespondierenden Schraubenbolzen in auseinandergezogenem Zustand zeigt, während Fig. 2 die Anordnung nach Fig. 1 im zusammengebauten und angelenkten Zustand wiedergibt.

Der Schraubenbolzen 1 weist einen Gewindeschaft 2 und einen im wesentlichen kugelförmigen Schraubenbolzenkopf 3 mit Abflachungen 4 auf, die Faßdaubenform aufweisen. Der Schraubenbolzenkopf ist in eine hülsenförmige Gelenkschale 5 aus Kunststoff einsetzbar, die in bekannter Weise durchgehende Längsschlitze in der Seitenwand aufweist, sodaß zurückfedernde Fahnen 6 gebildet sind, die ein Einschieben des Schraubenbolzenkopfs 3 in die Gelenkschale 5 ermöglichen, die eine den Abflachungen 4 des Schraubenbolzenkopfs 3 entsprechende Innenprofilierung 7 aufweist, die einen Sitz bildet, der das Verschwenken des Schraubenbolzens 1 gegenüber der Gelenkschale 5 erlaubt, aber eine verdrehsichere Verbindung darstellt, sodaß der Schraubenbolzen nur über die Gelenkschale 5 verdrehbar ist.

In Fig. 2 erkennt man eine Gewindehülse 8, die Teil eines Kfz-Scheinwerfers ist, sodaß beim Drehen des Schraubenbolzens 1 die Gewindehülse 8 entlang des Schraubenbolzens 1 verschoben und somit der Scheinwerfer um ein nicht dargestelltes federndes Lager verschraubt wird. Die Gelenkschale 5 sitzt drehbar in einer Kreisöffnung einer Ankerplatte 9 und wird dort mittels eines Sprengrings 10 und eines Stirnflanschs 11 fixiert, sodaß sie zwar drehbar ist, aber bei montiertem Sprengring 10 gegenüber der Ankerplatte 9 nicht mehr verschiebbar ist.

Die Montage erfolgt so, daß der Schraubenbolzen 1 zuerst in die Gewindehülse 8 soweit eingeschraubt wird, bis die Gelenkschale 5 zwischen Ankerplatte 9 und Gewindehülse 8 einsetzbar und am Schraubenbolzenkopf 3 anschnappbar ist. Dann wird die Gelenkschale 5 so lange gedreht, bis ihr Stirnflansch 11 an der Ankerplatte 9 satt anliegt. Dann wird der Sprengring 10 angeschnappt, der auch eine flache Scheibe sein kann. Nunmehr kann die Gewindehülse 8 gegenüber der Ankerplatte 9 durch Drehen der Gelenkschale 5 verschoben werden, wobei der Schraubenbolzen 1 samt der Gewindehülse 8 gegenüber Lagerschale 5 und Ankerplatte 9 verschwenkbar ist.

Die dargestellte Ausführungsform ist so konzipiert, daß die Ankerplatte 9 innerhalb der Karosserie liegt, wobei sich der Einstellungsort (die Gelenkschale 5) innerhalb oder außerhalb der eigentlichen Scheinwerfereinheit befinden kann.

Es besteht jedoch auch Bedarf an Lösungen für Scheinwerfereinstellungen von außerhalb der Karosserie. Ein erfindungsgemäßer Vorschlag hiezu ist eine Anordnung gemäß Fig. 2, wobei die Gelenkschale 5 am Karosserieblech befestigt ist, mithin also die Ankerplatte 9 das Karosserieblech ist. In diesem Fall ist vorteilhaft, die Gelenkschale 5 gegenüber-Fig. 2 umgedreht anzuordnen, sodaß nur der Stirnflansch 11 von außen sichtbar ist und sich der Schraubenbolzenkopf 3 innerhalb der Karosserie befindet. Dann kann natürlich auch günstig sein, in bekannter Weise den Schraubenbolzenkopf und dessen Sitz in der Gelenkschale glatt, also als Kugelkopf und Kugelsitz, auszuführen und im Kugelkopf eine stirnseitige Ausnehmung, z.B. einen Inbussechskant, zum Drehen des Schraubenbolzens 1 vorzusehen, was aber kein Teil der Erfindung ist.

## Patentansprüche

1. Kfz-Scheinwerferverstellung, bei der der Kopf (3) zumindest eines Schraubenbolzens (1) in einer hülsenförmigen Gelenkschale (5) schwenkbar gelagert ist und der Schraubenbolzenkopf (3) eine Profilierung zum Drehen des Schraubenbolzens (1) aufweist sowie die Gelenkschale (5) an einem feststehenden Bauteil (9) angeordnet ist, **dadurch gekennzeichnet, daß** Schraubenbolzenkopf (3) und Gelenkschale (5) korrespondierende Profilierungen (4,7) aufweisen, die eine verdrehsichere Verbindung mit variabler Winkelstellung zwischen Schraubenbolzen (1) und Gelenkschale (5) ermöglichen.

2. Verstellung nach Anspruch 1, **dadurch gekennzeichnet, daß** Schraubenbolzenkopf (3) und Gelenkschale (5) jeweils in einer ersten Axialebene randständige Erhebungen und in einer im rechten Winkel zur ersten Axialebene stehenden zweiten Axialebene randständige Vertiefungen aufweisen, wobei die Erhebungen eine kleinere Axialerstreckung als die Vertiefungen aufweisen.

3. Verstellung nach Anspruch 1, **dadurch gekennzeichnet, daß** die Profilierungen am Schraubenbolzenkopf (3) in Form von benachbarten Längsabflachungen (4) des Kopfs (3) vorgesehen sind.

4. Verstellung nach einem der Ansprüche 1 bis 3, **dadurch gekennzeichnet, daß** in der hülsenförmigen Gelenkschale (5) in Längsrichtung verlaufende Schlitze vorgesehen sind, die durch die Hülsenwand hindurchgehen.

## Claims

1. Motor vehicle headlamp adjustment, wherein the head (3) of at least one screw bolt (1) is pivotably mounted in a sleeve-like joint bowl (5) and the screw bolt head (3) is profiled in order to render it possible for the screw bolt (1) to be rotated and the joint bowl (5) is disposed on a fixed component (9), **characterised in that** the screw bolt head (3) and joint bowl (5) have corresponding profilings (4,7) which render it possible to provide a non-rotatable connection with a variable angle adjustment between the screw bolt (1) and the joint bowl (5).

2. Adjustment in accordance with claim 1, **characterised in that** the screw bolt head (3) and joint bowl (5) each comprise in a first axial plane continuous edge elevations and in a second axial plane which is at a right angle to the first axial plane continuous edge recesses, wherein the elevations comprise a smaller axial extension than the recesses.

3. Adjustment in accordance with claim 1, **characterised in that** the profilings on the screw bolt head (3) are provided in the form of adjacent longitudinal flattened regions (4) of the head (3).

4. Adjustment in accordance with any one of claims 1 to 3, **characterised in that** slots, which pass through the sleeve wall, extend in the sleeve-like joint bowl (5) in the longitudinal direction.

## Revendications

1. Système de réglage de phares de véhicules automobiles avec lequel la tête (3) d'au moins un boulon (1) est placée de manière pivotante dans une coquille articulée en forme de douille (5), la tête du boulon (3) comprend un profilage pour la rotation du boulon (1) et la coquille articulée (5) est disposée sur un composant fixe (9), **caractérisé en ce que** la tête du boulon (3) et la coquille articulée (5) comprennent des profilages correspondants (4, 7), qui permettent une liaison protégée contre les torsions dans des positions angulaires variables entre le boulon (1) et la coquille articulée (5).

2. Système de réglage selon la revendication 1, **caractérisé en ce que** la tête du boulon (3) et la coquille articulée (5) comprennent respectivement dans un premier plan axial des protubérances placées sur les bords et dans un deuxième plan axial se trouvant à angle droit par rapport au premier plan axial des renfoncements placés sur les bords, les protubérances ayant une extension axiale moindre que les renfoncements.

3. Système de réglage selon la revendication 1, **caractérisé en ce que** les profilages sur la tête du boulon (3) sont prévus sous la forme d'aplatissements longitudinaux voisins (4) de la tête (3).

4. Système de réglage selon l'une des revendications 1 à 3, **caractérisé en ce que** dans la coquille articulée en forme de douille (5) sont prévues des fentes s'étendant en direction longitudinale, qui passent à travers la paroi de la douille.
